# EUROPÄISCHE PATENTSCHRIFT

(11) **EP 0 472 949 B1**
(45) Veröffentlichungstag und Bekanntmachung des Hinweises auf die Patenterteilung: **25.05.1994**
(21) Anmeldenummer: 91112997.1
(22) Anmeldetag: 02.08.1991
(51) Int. Cl.: B29C 47/10, B01J 2/20, B22F 3/20, B01F 5/22, B01F 5/24, B01F 5/26

(54) **Zuführvorrichtung für das einem Extruder in mehreren Komponenten zuzuführende, zu extrudierende Material**
Feed hopper for providing an extruder with a plurality of components containing material to be extruded
Dispositif d'alimentation d'une extrudeuse pour un matériel à extruder avec plusieurs composantes

(30) Priorität: 25.08.1990 DE 4026957
(43) Veröffentlichungstag der Anmeldung: 04.03.1992
(73) Patentinhaber: INOEX GmbH, D-32547 Bad Oeynhausen (DE)
(72) Erfinder: Neumann, Ulrich, W-4970 Bad Oeynhausen 1 (DE)
(74) Vertreter: Cohausz & Florack Patentanwälte

(56) Entgegenhaltungen:
- DE-A- 1 454 818
- DE-A- 2 838 110
- DE-A- 3 506 635
- DE-A- 3 523 242
- US-A- 3 871 629

## Beschreibung

Die Erfindung bezieht sich auf eine Zuführvorrichtung für das einem Extruder in mehreren Komponenten (Hauptkomponente und mindestens eine Nebenkomponente) als Schüttgut zuzuführende, zu extrudierende Material, bestehend aus einem zentralen Schacht, in den von einer vorgeordneten Materialaufgabe mit Massendurchsatzerfassungseinrichtung die Hauptkomponente eingegeben wird, und aus einem, den Schacht unter Bildung eines Durchtrittsspaltes umgebenden, vor dem Einlauf des Extruders angeordneten Einlaufstutzen, wobei in den Einlaufstutzen oberhalb des Durchtrittsspaltes für jede Nebenkomponente eine Speisevorrichtung einmündet, deren Massendurchsatz in Abhängigkeit von dem gemessenen Massendurchsatz der Hauptkomponente eingestellt wird.

Solche Zuführvorrichtungen sind z.B. aus der DE-A-2 838 110 bekannt. Da der während des Betriebes schwankende Verbrauch des Extruders durch die Massendurchsatzerfassungseinrichtung erfaßt wird, ist es grundsätzlich möglich, der Hauptkomponente eine oder mehrere Nebenkomponenten mit der in ihrem Durchsatz einstellbaren Speisevorrichtung für jede Komponente in einem gewünschten Mischungsverhältnis beizumischen. Bei der in der Praxis eingesetzten Zuführvorrichtung, bei der der Einlaufstutzen als nur zum Extruder offener, sonst geschlossener Ringraum ausgebildet und der Schacht nach unten offen ist, zeigen sich allerdings Schwierigkeiten. Bei einer solchen Zuführvorrichtung kommt es zu einem Rückstau der Nebenkomponente in dem Ringraum um den zentralen Schacht. Deshalb ist eine dosierte Beimischung der Nebenkomponente nicht gewährleistet. Darüber hinaus wird wegen des Rückstaus die Förderschnecke der Speisevorrichtung unnötig belastet.

Der Erfindung liegt die Aufgabe zugrunde, eine Zuführvorrichtung für einen Extruder zu schaffen, die eine exakte Beimischung mindestens einer Nebenkomponente zu einer Hauptkomponente gewährleistet.

Diese Aufgabe wird erfindungsgemäß bei einer Zuführvorrichtung der eingangs genannten Art dadurch gelöst, daß am Ausgang des zentralen Schachtes ein Leitelement vorgesehen ist, das den aus dem Schacht austretenden Massenstrom radial nach außen ablenkt.

Praktische Versuche mit einer solchen Zuführvorrichtung haben ergeben, daß die eingespeiste Nebenkomponente oder die eingespeisten Nebenkomponenten vollständig aus dem Raum um den Schacht abgezogen werden, es also zu keinem Rückstau oberhalb des Ausgangs des Schachtes kommt. Dadurch ist eine exakte prozentuale Beimischung der Nebenkomponente(n) zur Hauptkomponente gewährleistet. Auch entfällt die Belastung der Speisevorrichtung infolge eines Rückstaus. Schließlich wird mit der erfindungsgemäßen Vorrichtung eine bessere Vermischung zwischen Haupt- und Nebenkomponente erreicht, weil die Nebenkomponente nicht in einen gefüllten Raum hineingefördert wird, sondern wegen des fehlenden Rückstaus im freien Fall in den Austrittsspalt gelangt. Die dabei freigesetzte Fallenergie führt zu einer Verwirbelung der zu vermischenden Komponenten. Dieser Effekt kann weiter verbessert werden, wenn der Einlaufstutzen oberhalb des Ausgangs des zentralen Schachtes als Trichter ausgebildet ist, auf dessen Innenwand dann das Schüttgut der Nebenkomponenten fällt und zurückspringt.

Nach einer Ausgestaltung der Erfindung kann das Leitelement als Pyramide oder Kegel mit in den Schacht weisender Spitze ausgebildet sein. Der äußere Rand des Leitelements sollte innerhalb einer gedachten Verlängerung des Schachtes liegen, damit es den Einzug der Nebenkomponente nicht behindert. Vorzugsweise liegt der Ausgang des zentralen Schachtes innerhalb eines zylindrischen Abschnittes des Einlaufstutzens. Auch diese Ausgestaltung hat sich positiv auf den störungsfreien Einzug der Nebenkomponenten ausgewirkt.

Im folgenden wird die Erfindung anhand einer ein Ausführungsbeispiel schematisch in Seitenansicht darstellenden Zeichnung näher erläutert.

Eine Materialaufgabevorrichtung für eine Hauptkomponente weist einen Waagebehälter 1 auf, der unten durch einen ein Leitelement bildenden zum Waagebehälter 1 hin kegelförmigen Boden 2 bis auf einen axialen Ringspalt 3 verschlossen ist. Der Boden 2 ist vom Waagebehälter 1 getragen. Der äußere Rand des Bodens 2 fluchtet mit dem unteren Rand des Behälters 1, so daß die gesamte Materialsäule im Behälter 1 von dem Boden 2 abgestützt wird. Das auszufördernde Material fließt radial nach außen ab, wobei sich eine axiale Entkopplung des Massenstroms ergibt, so daß der Waagebehälter 1 nur von dem Gewicht des in ihm enthaltenen Materials belastet ist. Der untere Bereich des Behälters 1 ist von einem größeren Behälter 4 umgeben, an den sich über einen trichterförmigen Mittelteil 5 ein zylindrischer Schacht 6 anschließt. Am Ausgang des zylindrischen Schachtes 6 ist unter Bildung eines umlaufenden axialen Ringspaltes 7 ein Leitelement 8 in Form eines flachen Kegels mit zum Schachtinnern hin weisender Spitze angeordnet. Der äußere Rand dieses Leitelementes 8 fluchtet mit dem unteren Rand des Schachtes 6. Das Material im Schacht 6 fließt mit radialer Strömungskomponente durch den Ringspalt 7 aus.

Der Schacht 6 ist unter Bildung eines ringförmigen Durchtrittsspaltes 9 von einem größeren zylindrischen dreistufigen Einlaufstutzen 10 umgeben, der aus einem Oberteil 11, einem trichterförmigen Mittelteil 12 und einem zylinderförmigen Unterteil 13 besteht, das auf dem Einlauf eines Extruders 14 aufgebaut ist. Der unterhalb des Ausgangs des Schachtes 6 liegende Ringspalt 7 liegt im Bereich des zylinderförmigen Unterteils 13.

In den Oberteil 11 des zylindrischen Behälter 10 mündet radial eine Speisevorrichtung 15 ein, die aus einem Behälter 16 mittels einer Schnecke 17 dosiert eine Nebenkomponente in den Behälter 10 fördert.

Der Waagebehälter 1 für die Hauptkomponente ruht zu diesem Zweck auf Druckmeßdosen 18, deren Meßwert an eine Steuereinrichtung 19 geliefert wird. Da die Materialsäule im Waagebehälter 1 vom Boden 2 abgestützt wird und das aus dem Waagebehälter 1 abfließende Material seitlich abrieselt und deshalb der Massenstrom entkoppelt ist, läßt sich mittels des Waagebehälters 1 exakt der Austrag aus dem Waagebehälter 1 erfassen. Da vom Austrittsspalt 3 bis zum Extruder 14 ein lückenloser Massenstrom besteht, ist der Austrag aus dem Waagebehälter 1 gleich dem Verbrauch des Extruders 14, sofern auf dem Weg vom Ringspalt 3 zum Extruder 14 nicht weitere Nebenkomponenten zugeführt werden. Damit im Betrieb der Waagebehälter 1 nicht leerläuft, wird per Software über die Steuereinrichtung 19 ein Signal zur Eingabe einer neuen Materialcharge ausgelöst.

Aus dem zentralen Schacht 6 fließt das Material über den Ringspalt 7 mit einer radialen Strömungskomponente nach außen in den Stutzen **10**. In dem ringförmigen Durchtrittsspalt 9 zwischen dem Ringspalt 7 des Schachtes 6 und dem Unterteil 13 des Stutzens 10 wird diesem Material der Hauptkomponente Material der Nebenkomponente beigemischt, das über die Speisevorrichtung zugeführt wird. Dieses Material kreuzt mit seiner mehr oder weniger senkrecht nach unten gerichteten Strömungskomponente das Material der Hauptkomponente, so daß sich eine gute Durchmischung ohne Rückstau der Nebenkomponente ergibt. Eine weitere Durchmischung findet dadurch statt, daß das Material der Nebenkomponente auf den trichterförmigen Mittelteil 12 fällt, hier abprallt und sich großräumig verteilt. Die Menge der Nebenkomponente hängt von dem Verbrauch des Extruders 14 ab. Da wegen der Massendurchsatzerfassung die Verbrauchsmenge bekannt ist, kann der Antrieb **21** der Schnecke 17 der Speisevorrichtung von der Steuereinrichtung 19 derart angesteuert werden, daß eine bestimmte prozentuale Menge des Verbrauchs als Nebenkomponente beigemischt wird. Da die Nebenkomponente ohne Rückstau in den Stutzen **10** gelangt und der Hauptkomponente beigemischt wird, also die Zuführung der Nebenkomponente vorrangig erfolgt, reduziert sich automatisch die Hauptkomponente um den Anteil der Nebenkomponenten.

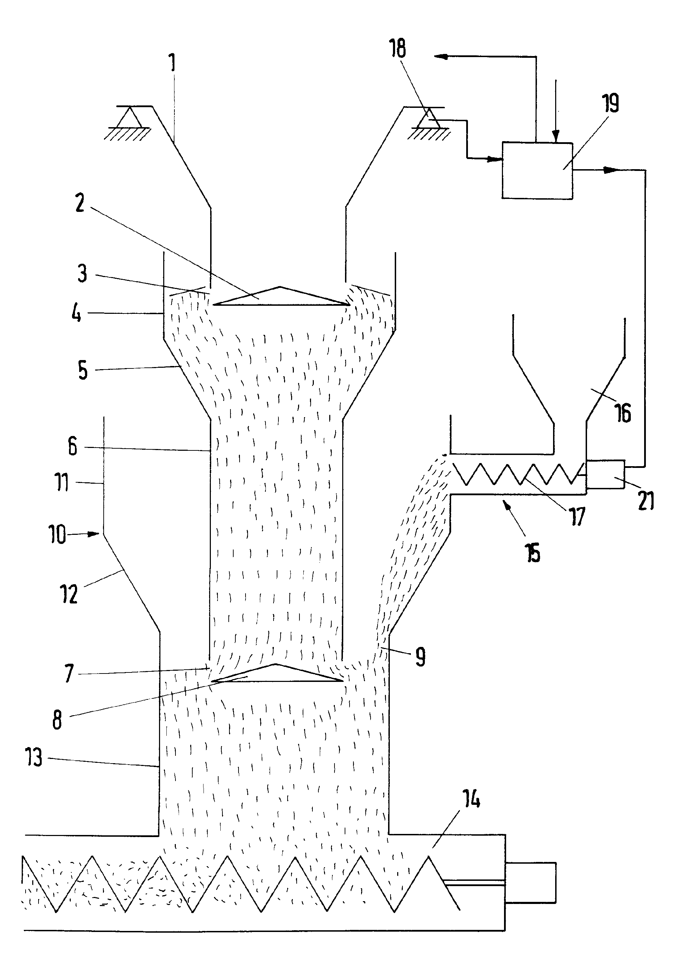

## Patentansprüche

1. Zuführvorrichtung für das einem Extruder (14) in mehreren Komponenten (Hauptkomponente und mindestens eine Nebenkomponente) als Schüttgut zuzuführende, zu extrudierende Material, bestehend aus einem zentralen Schacht (6), in den von einer vorgeordneten Materialaufgabevorrichtung (1-3) mit einer Massendurchsatzerfassungseinrichtung (18-20) die Hauptkomponente eingegeben wird, und aus einem den Schacht (6) unter Bildung eines Durchtrittsspaltes (9) umgebenden, vor dem Einlauf des Extruders (14) angeordneten Einlaufstutzen (10), wobei in den Einlaufstutzen (10) oberhalb des Durchtrittsspaltes (9) für jede Nebenkomponente eine Speisevorrichtung (15) einmündet, deren Massendurchsatz in Abhängigkeit von dem gemessenen Massendurchsatz der Hauptkomponenten eingestellt wird,
**dadurch gekennzeichnet,** daß am Ausgang des zentralen Schachtes (6) ein Leitelement (8) vorgesehen ist, das den aus dem Schacht (6) austretenden Massenstrom radial nach außen ablenkt.

2. Zuführvorrichtung nach Anspruch 1,
**dadurch gekennzeichnet,** daß das Leitelement (8) als Pyramide oder Kegel mit in den Schacht (6) weisender Spitze ausgebildet ist.

3. Zuführvorrichtung nach Anspruch 1 oder 2,
**dadurch gekennzeichnet,** daß der äußere Rand des Leitelementes (8) innerhalb einer gedachten Verlängerung des Schachtes (6) liegt.

4. Zuführvorrichtung nach einem der Ansprüche 1 bis 3, **dadurch gekennzeichnet,** daß der Ausgang des zentralen Schachtes (6) innerhalb eines zylindrischen Abschnittes (13) des Einlaufstutzens (10) liegt.

5. Zuführvorrichtung nach einem der Ansprüche 1 bis 4, **dadurch gekennzeichnet,** daß der Einlaufstutzen (10) oberhalb des Ausgangs des zentralen Schachtes (6) als Trichter (12) ausgebildet ist.

## Claims

1. A feed device for the material to be extruded which is fed to an extruder (14) as a bulk material in a number of components (a main component and at least one subsidiary component), the device comprising: a central shaft (6), into which the main component is introduced from a preceding material introducing device (1-3) with a mass throughput determining device (18-20); and an inlet spigot (10) disposed in front of the inlet of the extruder (14) and enclosing the shaft (6), with the formation of a passage gap (9), while discharging into the inlet spigot (10) above the passage gap (9) for each subsidiary component is a feed device (15) whose mass throughput is adjusted in dependence on the measured mass throughput of the main component, characterized in that disposed at the outlet of the central shaft (6) is a deflecting element (8) which deflects radially and outwardly the mass flow emerging from the shaft (6).

2. A feed device according to claim 1, characterized in that the deflecting element (8) is constructed in the form of a pyramid or cone whose apex points into the shaft (6).

3. A feed device according to claims 1 or 2, characterized in that the outer edge of the deflecting element (6) lies within an imaginary prolongation of the shaft (6).

4. A feed device according to one of claims 1 to 3, characterized in that the outlet of the central shaft (6) lies within a cylindrical portion (13) of the inlet spigot (10).

5. A feed device according to one of claims 1 to 4, characterized in that the inlet spigot (10) is constructed in the form of a funnel (12) above the outlet of the central shaft (6).

## Revendications

1. Dispositif d'acheminement d'une matière à extruder devant être introduite dans une extrudeuse (14) sous la forme d'une matière en vrac, en plusieurs composants (un composant principal et au moins un composant secondaire), ce dispositif étant constitué d'une gaine verticale centrale (6), dans laquelle le composant principal est introduit par un dispositif de chargement de matière (1 à 3) disposé en amont et comportant des moyens de détection de débit massique (18 à 20), et d'un conduit d'entrée (10) qui entoure la gaine verticale (6), en formant un intervalle de passage (9), et est disposé en amont de l'entrée de l'extrudeuse (14) et dans lequel débouche, au-dessus de l'intervalle de passage (9) et pour chaque composant secondaire, un dispositif d'alimentation (15) dont le débit massique est réglé en fonction du débit massique mesuré du composant principal, caractérisé en ce qu'à la sortie de la gaine verticale centrale (6), il est prévu un élément de guidage (8) qui dévie radialement vers l'extérieur le flux massique sortant de la gaine verticale (6).

2. Dispositif d'acheminement suivant la revendication 1, caractérisé en ce que l'élément de guidage (8) est réalisé sous la forme d'une pyramide ou d'un cône à sommet tourné vers la gaine verticale (6).

3. Dispositif d'acheminement suivant l'une des revendications 1 et 2, caractérisé en ce que le bord extérieur de l'élément de guidage (8) est situé à l'intérieur d'un prolongement imaginaire de la gaine verticale (6).

4. Dispositif d'acheminement suivant l'une des revendications 1 à 3, caractérisé en ce que la sortie de la gaine verticale centrale (6) est située à l'intérieur d'une section cylindrique (13) du conduit d'entrée (10).

5. Dispositif d'acheminement suivant l'une des revendications 1 à 4, caractérisé en ce qu'au-dessus de la sortie de la gaine verticale centrale (6), le conduit d'entrée (10) est réalisé sous la forme d'un entonnoir (12).
